# EUROPÄISCHE PATENTSCHRIFT

(11) **EP 3 935 700 B1**
(45) Veröffentlichungstag und Bekanntmachung des Hinweises auf die Patenterteilung: **23.07.2025**
(21) Anmeldenummer: 20708403.9
(22) Anmeldetag: 25.02.2020
(51) Int. Cl.: H01R 33/02, A43B 3/10, H01M 50/213, H01M 50/503, H01M 50/107, H01M 50/152

(54) **VORRICHTUNG ZUM LÖSBAREN KONTAKTIEREN EINER BATTERIEZELLE**
DEVICE FOR MAKING RELEASABLE CONTACT WITH A BATTERY CELL
DISPOSITIF DE MISE EN CONTACT LIBÉRABLE D'UN ÉLÉMENT DE BATTERIE

(30) Priorität: 08.03.2019 AT 501872019
(43) Veröffentlichungstag der Anmeldung: 12.01.2022
(73) Patentinhaber: John Deere Electric Powertrain LLC, Moline, IL 61265 (US)
(72) Erfinder: WALDSCHÜTZ, Gerhard, 4240 Freistadt (AT); SCHMUDERMAIER, Wolfgang, 3862 Eisgarn (AT); DREXLER, Florian, 4240 Freistadt (AT); DOBUSCH, Peter, 4264 Grünbach (AT)
(74) Vertreter: Hübscher & Partner Patentanwälte GmbH
(86) Internationale Anmeldenummer: PCT/AT2020/060053
(87) Internationale Veröffentlichungsnummer: WO 2020/181307

(56) Entgegenhaltungen:
- EP-A1- 3 096 372
- EP-A2- 1 953 849
- JP-A- 2003 077 453
- US-A1- 2005 070 164

## Beschreibung

### Technisches Gebiet

Die Erfindung bezieht sich auf eine Vorrichtung zum lösbaren Kontaktieren einer Batteriezelle mit einer gegen eine Fügerichtung offenen Zellenaufnahme, die von einer Kontaktfederbasis begrenzt wird, von der gegen die Fügerichtung Kontaktzungen zum mantelseitigen Umgreifen der Batteriezelle aufragen, wobei die Kontaktzungen radial in die Zellenaufnahme vorragende Kontaktkörper in Form eines geschnittene Ovoides aufweisen.

### Stand der Technik

Aus der EP3096372A1 ist eine Kontaktfeder zum seriellen Kontaktieren zweier Batteriezellen bekannt. Die Kontaktfeder weist Kontaktzungen auf, die eine erste Batteriezelle umgreifen und diese stoffschlüssig mit einer zweiten Batteriezelle verbinden. Vor allem bei großen, ungleichmäßig ausgestalteten oder schlecht in der Kontaktfeder sitzenden Batteriezellen kann von den Kontaktzungen keine ausreichend große Klemmkraft auf den Mantel der Batteriezelle aufgebracht werden, weswegen bei dynamischen mechanischen Belastungen keine ausreichend sichere Kontaktierung für hochkapazitive Batteriezellen mit großen Durchmessern, wie beispielsweise Rundzellen des Typs 21700, gewährleistet werden kann. Zudem kommt der Nachteil, dass es beim Einfügen der Batteriezelle in die von den Kontaktzungen aufgespannte Zellenaufnahme und bei etwaigen Relativbewegungen der Batteriezelle in eben dieser Zellenaufnahme auf Grund der scharfkantigen Ausgestaltung der Kontaktzungen zu einer sukzessiven Beschädigung des Batteriezellenmantels und/oder einer etwaigen oxidationshindernden Beschichtung der Kontaktzungen selbst kommt. Darüber hinaus ergibt sich aufgrund der variierenden Kontaktflächen zwischen den Kontaktzungen und des Batteriezellenmantels ein veränderlicher Kontaktwiderstand, was ungünstige elektrische Betriebsbedingungen mit sich bringt. Aus diesem Grunde werden üblicherweise stoffschlüssige Verbindungen zwischen den Kontaktfedern und den Batteriezellen bevorzugt.

Um daher auch bei schwer zugänglichen Kontaktstellen eine stoffschlüssige Verbindung zu erreichen, wurde bereits vorgeschlagen (US6120564, EP2087554A1, EP2048723A1, JP2003077453A) auf den Kontaktfedern Schweißpunkte vorzusehen, die eine stoffschlüssige Verbindung beim Anlegen eines entsprechend hohen Stromes ermöglichen. Nachteilig ist daran allerdings in nachvollziehbarer Weise, dass, abgesehen von den Einschränkungen bei der Assemblierung und der fehlenden Tauschbarkeit defekter Batteriezellen, die beim Schweißen auftretenden Ströme und Temperaturen zu einer Beschädigung der Batteriezellen führen können.

In der EP1953849A2 und der US20050070164A1 werden Vorrichtungen zum stoffschlüssigen Kontaktieren von Batteriezellen vorgestellt. Die Batteriezellen werden dabei über Schweißvorsprüngen in Form von geschnittenen Ovoiden mit einer Kontaktfeder verbunden, wonach die Batterien mit dieser verschweißt werden.

### Darstellung der Erfindung

Der Erfindung liegt somit die Aufgabe zugrunde, eine Vorrichtung zum lösbaren Kontaktieren einer Batteriezelle vorzuschlagen, die unabhängig von der relativen Lage der eingesetzten Batteriezellen sowie weitgehend unabhängig von deren Durchmesser auch bei periodischen mechanischen Belastungen eine zuverlässige elektrische Verbindung ermöglicht, ohne den Assembliervorgang zu erschweren.

Die Erfindung löst die gestellte Aufgabe dadurch, dass die Kontaktzungen gegen die Zellenaufnahme konvex gekrümmt sind, wobei die Kontaktkörper jeweils im Bereich des Krümmungsscheitels angeordnet sind. Im Gegensatz zu einer aus dem Stand der Technik bekannten Kontaktfeder, die je nach relativer Lage eine unbestimmbare Kontaktfläche mit der vom Durchbruch umschlossenen Batteriezelle aufweisen würde, wird durch das erfindungsgemäße Vorsehen eines Kontaktkörpers in Form eines geschnittenen Ovoides, vorzugsweise in Form einer Hemisphäre, die Kontaktfläche zwischen der Kontaktzunge und dem Mantel vorgegeben, sodass sich ein definierter Kontaktwiderstand zwischen dem Kontaktkörper bzw. der Kontaktzunge und der Batteriezelle ergibt. Dieser Kontaktwiderstand ist selbst bei einer periodischen mechanischen Verformung der Vorrichtung zufolge von Vibrationen weitgehend konstant. Aufgrund der abgerundeten Oberfläche der Kontaktkörper kann darüber hinaus eine Oberflächenbeschädigung vermieden werden, zumal die Kontaktkörper die scharfkantigen Kontaktzungen vom jeweiligen Oberflächenmantel der Batteriezellen trennen.

Eine verbesserte elektrische Kontaktierung bei gleichzeitig einfachen Herstellungsbedingungen ergibt sich, wenn die Kontaktkörper aus den Kontaktzungen gedrückt sind. Dadurch können die Kontaktkörper in einem Arbeitsschritt hergestellt werden, wobei die abgerundete Oberfläche zur Vermeidung von Oberflächenbeschädigungen ohne eine gesonderte Nachbearbeitung erreicht werden kann. Zur Verringerung des Fremdschichtwiderstandes können die Kontaktkörper mit einer oxidationshindernden Beschichtung versehen sein. Eine solche Beschichtung kann in einer besonders vorteilhaften Ausgestaltung der Erfindung dadurch hergestellt werden, dass die Kontaktzungen vor dem Drücken der Kontaktkörper bereits mit einer für den Fachmann hinreichenden Beschichtungsdicke versehen sind, sodass nach dem Umformen die in die Zellenaufnahme vorragende Kontaktkörperoberfläche eine geschlossene oxidationshindernde Beschichtung aufweist. Als Beschichtungen können etwa Nickel oder Gold als Oxidationsschutz zur Senkung des Fremdschichtwiderstandes eingesetzt werden.

Um eine erfindungsgemäße Vorrichtung auch bei am Batteriezellenboden entgasenden Batteriezellen einsetzen zu können und gleichzeitig den zuverlässigen Sitz der Batteriezellen in der Zellenaufnahme zu verbessern, wird vorgeschlagen, dass der Rand der Kontaktfederbasis zu einem Stehfalz aufgebogen ist, an den die Kontaktzungen anschließen. Der Stehfalz umschließt den Endabschnitt des Batteriezellenmantels, sodass ein seitliches Abströmen zwischen den Kontaktzungen des bodenseitig aus der Batteriezelle strömenden Gases verhindert wird und der zu einem dafür vorgesehenen Entgasungskanal geleitet werden kann, der beispielsweise an eine dafür vorgesehene Öffnung in der Kontaktfederbasis anschließt. Gleichzeitig führt der Stehfalz zu einer Aussteifung der Kontaktfederbasis und der daran anschließenden Kontaktzungen, sodass trotz einer etwaigen Öffnung zur Ableitung von aus der Batteriezelle ausströmendem Heißgas die auf den Batteriezellenmantel wirkende Klemmkraft der Kontaktzungen erhöht werden kann. Damit wird auch die elektrische Leitfähigkeit, die proportional mit der von den Kontaktkörpern übertragene Kontaktnormalkraft steigt, erhöht. Die Öffnung zur Ableitung von aus der Batteriezelle ausströmendem Heißgas kann beispielsweise auch durch einen an die Kontaktfederbasis anschließenden, mäander- oder spiralförmigen Anschlussleiter gebildet werden, der eine serielle Verbindung mit einer weiteren Batteriezelle ermöglicht.

Damit ein schonendes Einfügen der Batteriezelle in die Vorrichtung auch bei großer von den Kontaktzungen ausgeübter Klemmkraft erzielt werden kann, sind die Kontaktzungen gegen die Zellenaufnahme konvex gekrümmt, wobei die Kontaktkörper jeweils im Bereich des Krümmungsscheitels angeordnet sind. Zu Folge dieser Maßnahmen kann eine besonders effiziente Übertragung der durch die Kontaktzungen erzeugten Klemmkraft erreicht werden, weil die auf den Batteriezellenmantel einwirkende Kontaktnormalkraft maximiert und der Engewiderstand minimiert wird. Obwohl durch die erfindungsgemäße Krümmung die Steifigkeit der Kontaktzungen erhöht wird, kann der Einfügeprozess der Batteriezelle durch die sich nach dem Scheitel gegen Fügerichtung erweiternde Querschnittsfläche der von den Kontaktzungen umspannten Zellenaufnahme erleichtert werden.

### Kurze Beschreibung der Erfindung

In der Zeichnung ist der Erfindungsgegenstand beispielsweise dargestellt. Es zeigen
- Fig. 1: eine Seitenansicht einer zwei Batteriezellen miteinander elektrisch verbindenden, erfindungsgemäßen Vorrichtung und
- Fig. 2: eine perspektivische Darstellung eines Ausführungsbeispiels der erfindungsgemäßen Vorrichtung im größeren Maßstab.

### Wege zur Ausführung der Erfindung

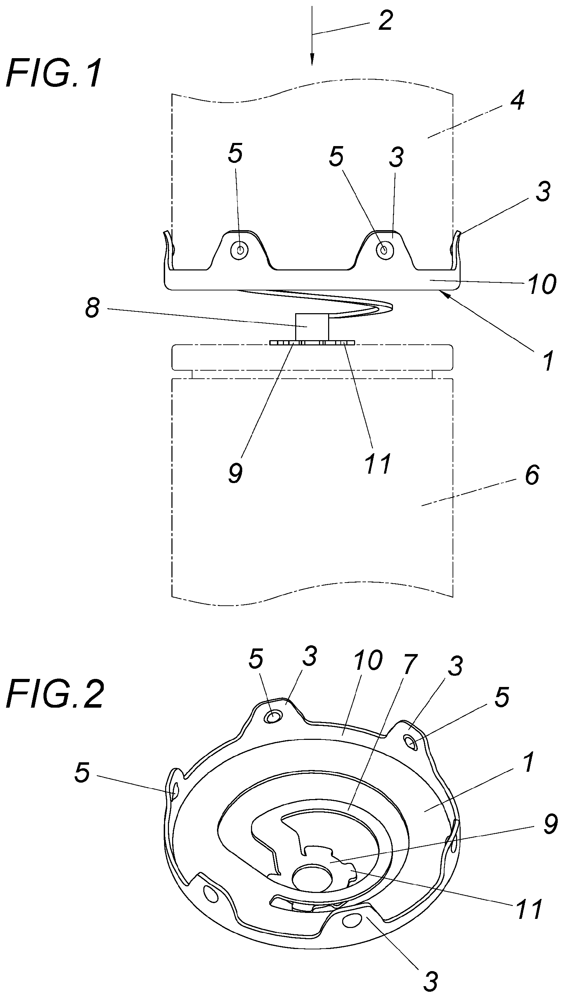

Eine erfindungsgemäße Vorrichtung weist eine Kontaktfederbasis 1 mit gegen eine Fügerichtung 2 aus der Kontaktfederbasis 1 ragenden Kontaktzungen 3 auf. Um eine erste, in der Fig. 1 dargestellte, Batteriezelle 4 zu umgreifen und diese elektrisch zu verbinden, sind die Kontaktzungen 3 umfangseitig an der Kontaktfederbasis 1 angeordnet und bilden so eine gegen die Fügerichtung 2 offene Zellenaufnahme. Die erste Batteriezelle 4 ist durch die Kontaktzungen 3 lösbar mit der Vorrichtung verbunden, wodurch einerseits ein durch Relativbewegungen der Batteriezelle 4 zur Zellenaufnahme ermöglichter Toleranzausgleich bei periodischen mechanischen Betriebsbedingungen erzielt und andererseits der Assemblierungsvorgang beim Einfügen der Batteriezelle 4 in die Zellenaufnahme erleichtert wird. Um trotz dieser lösbaren Verbindung eine betriebssichere und gleichmäßige Kontaktierung zu gewährleisten, weisen die Kontaktzungen 3, wie vorzugsweise der Fig. 2 zu entnehmen, batteriemantelseitig ovoid ausgebildete Kontaktkörper 5 auf, die im Bereich des Krümmungsscheitels der Kontaktzungen 3 angeordnet sind. Durch diese spezielle Geometrie wird unabhängig von der relativen Lage der Batteriezelle 4 zur Zellenaufnahme an allen Kontaktzungen 3 eine annähernd kongruente Kontaktfläche geschaffen. Auf Grund der Tatsache, dass die ovoiden Kontaktkörper 5 durch ein Druckumformungsverfahren, beispielsweise durch Eindrücken, erzeugt werden, kann eine Beschädigung von etwaigen vorgefertigten Beschichtungen verhindert werden, wodurch der Lebenszyklus der Batterie 4 deutlich verlängert wird.

Wird die Vorrichtung zum seriellen Kontaktieren zweier Batteriezellen 4,6 eingesetzt, so kann aus der Kontaktfederbasis 1 ein mäanderförmiger Anschlussleiter 7 entspringen, der für eine stoffschlüssige Verbindung mit der zweiten Batteriezelle 6 eine einen Pol 8 der Batteriezelle 6 umfangseitig einfassende Polaufnahme 9 aufweist. Durch die insbesondere in der Fig. 2 ersichtliche, mäanderförmige Ausgestaltung des Anschlussleiters 7 kann in und gegen die Fügerichtung 2 ein mechanischer Toleranzausgleich erfolgen, wobei der schmale Steg des Anschlussleiters 7 gleichzeitig als Schmelzsicherung bei Überströmen dienen kann.

Besonders schonende Fügebedingungen ergeben sich, wenn die Kontaktzungen 3 entgegen der Fügerichtung 2 eine abgerundete Verjüngung und eine gegen die Zellenaufnahme, zur Batteriezelle 4 konvexe Krümmung aufweisen, wodurch, vor allem wenn der Rand der Kontaktfederbasis 1 zu einem Stehfalz 10 aufgebogen ist, auch bei groß dimensionierten Batteriezellen eine ausreichend hohe Klemmkraft zur sicheren Kontaktierung erzeugt werden kann. Vorteilhafterweise schließt der Stehfalz 10 formschlüssig an die Batteriezelle 4 an, sodass ein seitliches Austreten etwaiger aus der Batteriezelle 4 bodenseitig austretender Entgasungsströme verhindert werden kann. Um auch eine möglichst prozesssichere stoffschlüssige Verbindung zwischen dem Pol 8 der Batteriezelle 6 und der Polaufnahme 9 zu ermöglichen, weist die Polaufnahme 9 umfangseitig angeordnete Ausrichtflossen 11 auf, die zur Justierung als Anschlagfläche für beispielsweise einen Schweißkolben fungieren können.

## Patentansprüche

1. Vorrichtung zum lösbaren Kontaktieren einer Batteriezelle (4) mit einer gegen eine Fügerichtung (2) offenen Zellenaufnahme, die von einer Kontaktfederbasis (1) begrenzt wird, von der gegen die Fügerichtung (2) Kontaktzungen (3) zum mantelseitigen Umgreifen der Batteriezelle (4) aufragen, wobei die Kontaktzungen (3) radial in die Zellenaufnahme vorragende Kontaktkörper (5) in Form eines geschnittene Ovoides aufweisen, **dadurch gekennzeichnet, dass** die Kontaktzungen (3) gegen die Zellenaufnahme konvex gekrümmt sind, wobei die Kontaktkörper (5) jeweils im Bereich des Krümmungsscheitels angeordnet sind.

2. Vorrichtung nach Anspruch 1, **dadurch gekennzeichnet, dass** die Kontaktkörper (5) aus den Kontaktzungen (3) gedrückt sind.

3. Vorrichtung nach einem der Ansprüche 1 oder 2, **dadurch gekennzeichnet, dass** der Rand der Kontaktfederbasis (1) zu einem Stehfalz (10) aufgebogen ist, an den die Kontaktzungen (3) anschließen.

## Claims

1. Device for detachable contacting a battery cell (4) with a cell receptacle open against a joining direction (2), which cell receptacle is delimited by a contact spring base (1), from which contact tongues (3) protrude in the direction opposite to the joining direction (2) for the jacket-side enclosure of the battery cell (4), wherein the contact tongues (3) have contact bodies (5) in the form of a cut ovoid protruding radially into the cell receptacle, **characterized in that** the contact tongues (3) are curved convexly toward the cell receptacle, wherein the contact bodies (5) are each arranged in the region of the apex of the curvature.

2. Device according to claim 1, **characterized in that** the contact bodies (5) are pressed out of the contact tongues (3).

3. Device according to one of claims 1 or 2, **characterized in that** the edge of the contact spring base (1) is bent upward to form a standing seam (10) to which the contact tongues (3) are connected.

## Revendications

1. °/ Dispositif pour établir un contact amovible d'une cellule de batterie (4) avec un logement de cellule ouvert dans le sens opposé au sens de l'insertion (2), qui est délimité par une base de ressort de contact (1) à partir de laquelle s'élèvent, dans le sens opposé au sens d'insertion (2), des languettes de contact (3) destinées à entourer la cellule de batterie (4) sur les côtés de l'enveloppe, les languettes de contact (3) comportant des corps de contact (5) en forme d'ovale coupé qui font saillie radialement dans le logement de batterie, **caractérisé en ce que** les languettes de contact (3) sont courbées de manière convexe contre le logement de batterie, les corps de contact (5) étant disposés chacun dans la zone du sommet de la courbure.

2. °/ Dispositif selon la revendication 1, **caractérisé en ce que** les corps de contact (5) sont estampés hors des languettes de contact (3).

3. °/ Dispositif selon l'une des revendications 1 ou 2, **caractérisé en ce que** le bord de la base du ressort de contact (1) est replié pour former un agrafage (10) auquel se raccordent les languettes de contact (3).
